# EUROPEAN PATENT APPLICATION

(11) **EP 4 148 921 A1**
(43) Date of publication of application: **15.03.2023**
(21) Application number: 22205604.6
(22) Date of filing: 23.10.2018
(51) Int. Cl.: H02B 11/24

(54) **SHUTTER MECHANISM FOR SWITCHGEAR AND SWITCHGEAR THEREOF**

(62) Divisional of application: 18938052.0
(71) Applicant: ABB Schweiz AG, 5400 Baden (CH)
(72) Inventor: YANG, Changzhou, Xiamen Fujian, 361006 (CN); QIU, Xuedong, Xiamen Fujian, 361101 (CN); CAO, Xiaolei, Xi'an Shaanxi, 710061 (CN); HUANG, Ming, Xiamen Fujian, 361013 (CN); HUANG, Liqun, Xiamen Fujian, 361006 (CN)
(74) Representative: Zimmermann & Partner Patentanwälte mbB

(57) **Abstract**

A shutter mechanism (100) for a switchgear (200), comprising:
a first moveable cover (101) and a second moveable cover (102) configured to be arranged between fixed contacts (202) and moveable contacts (201) of a circuit breaker on a withdrawable truck (203) of the switchgear (200); and
a transmission mechanism (10) configured to be arranged at least in part below the withdrawable truck (203) and coupled to the first and second moveable covers (101, 102), the transmission mechanism (10) adapted to be actuated by a movement of the withdrawable truck (203) to drive the first and second moveable covers (101, 102) to
move close to each other to a block position to block the fixed contacts (202) when the withdrawable truck (203) moves to a test position, and
move away from each other to an unblock position to unblock the fixed contacts (202) when the withdrawable truck (203) moves from the test position to an intermediate position between the test position and a work position;
wherein the transmission mechanism (10) comprises:
a first transmission assembly (103) arranged at least in part under the withdrawable truck (203) and coupled to the first moveable cover (101), the first transmission assembly (103) adapted to be actuated by a movement of the withdrawable truck (203) to move the first moveable cover (101); and
a second transmission assembly (104) arranged between and coupled to the first and second moveable covers (101, 102), the second transmission assembly (104) adapted to be actuated by a movement of the first moveable cover (101) to drive the second moveable cover (102) to move between a block position and a unblock position in response to the movement of the withdrawable truck (203).

## Description

### FIELD

Embodiments of the present disclosure generally relate to switchgear, and more specifically, to a shutter mechanism for a switchgear and the switchgear thereof.

### BACKGROUND

Medium voltage and high voltage switchgear are commonly used electrical equipment in transmission and distribution lines. At least one circuit breaker is arranged in the switchgear to open or close the main circuit. The circuit breaker is commonly positioned on a withdrawable truck to move with the withdrawable truck between a test position and a work position. In the test position, the moveable contacts of the circuit breaker are disconnected with the fixed contacts. The handcar may move out of the switchgear to facilitate the maintenance of the switchgear. At this time, the fixed contacts with high voltage are exposed to the outside, thereby posing a risk of electric shock to the maintenance personnel.

In the known solutions, in order to reduce such a risk, a shutter mechanism is introduced between the moveable and fixed contacts of the circuit breaker. The shutter mechanism comprises two covers to cover the fixed contacts during the maintenance. The covers may be driven to unblock the fixed contacts by moving the withdrawable truck after the maintenance is finished. In this way, the moveable contacts may move with the withdrawable truck and be inserted into the unblocked fixed contacts.

### SUMMARY

In the conventional solution, a driving assembly of the shutter mechanism is coupled directly to the first and second moveable covers with a complicated structure of the shutter mechanism. Such a conventional structure of the shutter mechanism brings many drawbacks. For example, the transmission mechanism is typically arranged on the sides of the withdrawable trucks, which is accessible to the user. The user sometimes may open the covers when in the test position by operating the transmission mechanism directly. Furthermore, such an arrangement makes the distance between phase and earth small, the assembly of the shutter mechanism is duplicated, the occupied space is large, and the interlocking assembly for preventing the covers from being opened manually is prone to failure.

In order to at least partially address the above and other potential problems, embodiments of the present disclosure provide a shutter mechanism for a switchgear and associated switchgear. The shutter mechanism according to embodiments of the present disclosure is simple in structure, easy to assemble and makes an increased distance between the phase and earth.

In a first aspect, embodiments of the present disclosure provide a shutter mechanism for a switchgear. The shutter mechanism comprises a first moveable cover and a second moveable cover arranged between fixed contacts and moveable contacts of a circuit breaker on a withdrawable truck of the switchgear; and a transmission mechanism arranged at least in part below the withdrawable truck and coupled to the first and second moveable covers, the transmission mechanism adapted to be actuated by a movement of the withdrawable truck to drive the first and second moveable covers to move close to each other to a block position to block the fixed contacts when the withdrawable truck moves to a test position, and move away from each other to an unblock position to unblock the fixed contacts when the withdrawable truck moves from the test position to an intermediate position between the test position and a work position.

By arranging the transmission mechanism at least in part below the withdrawable truck, the transmission mechanism is inaccessible to the user when the first and second moveable covers are in the test position. In this way, the first and second moveable covers cannot be opened by manually operating the transmission mechanism directly or by pushing the covers, improving the safety of the shutter mechanism. In addition, such a structure of the shutter mechanism may be located in a lower position, increasing the distance between phase and earth.

In some embodiments, the transmission mechanism comprises an actuating portion arranged below the withdrawable truck and adapted to be driven to rotate when the withdrawable truck moves from the test position to the intermediate position; and a performing portion coupled to the first and second moveable covers and extending along a rotating axis parallel to a moving direction of the first and second moveable covers; wherein the performing portion is operable to rotate with a rotation of the actuating portion to drive the first and second moveable covers to move between the block and unblock positions. In this way, the structure of the shutter mechanism becomes simple and reduces the assembly difficulty and costs.

In some embodiments, the transmission mechanism further comprises a transmission portion coupled to the actuating portion and the performing portion to cause the performing portion to rotate with the actuating portion and a gearbox coupled to the actuating portion and the transmission portion to change a transmission ratio. In this way, the first and second moveable covers can be opened or closed by the slight rotation of the actuating portion.

In some embodiments, the performing portion comprises a lead screw with a first threaded portion and a second threaded portion; wherein the first moveable cover is coupled to the first threaded portion via a first bushing and the second moveable cover is coupled to the second threaded portion via a second bushing to move between the block and unblock positions in response to a rotation of the lead screw. In this way, the first and second moveable covers cannot be opened by force applied on the covers.

In some embodiments, the shutter mechanism further comprises a reset component coupled to the actuating portion and adapted to drive the actuating portion to rotate back to an initial position when the withdrawable truck moves from the intermediate position to the test position. In this way, the shutter mechanism can return to an initial position when the withdrawable truck is in the test position with a simple structure.

In some embodiments, the performing portion comprises a pressure angle configured to prevent the performing portion from being rotated by driving the first and second moveable covers directly. In this way, the first and second moveable covers cannot be opened by applying a force directly on the first and second moveable covers when the withdrawable truck is in the test position.

In some embodiments, the transmission mechanism comprise a first transmission assembly arranged at least in part under the withdrawable truck and coupled to the first moveable cover and adapted to be actuated by a movement of the withdrawable truck to move the first moveable cover; and a second transmission assembly arranged between and coupled to the first and second moveable covers, the second transmission assembly adapted to be actuated by a movement of the first moveable cover to drive the second moveable cover to move between a block position and a unblock position in response to the movement of the withdrawable truck.

The shutter mechanism according to embodiments of the present disclosure uses a separated transmission assemblies to drive the first and second moveable covers. In this way, the structure of the shutter mechanism becomes simple and reduces the assembly difficulty and costs. Furthermore, such a structure of the shutter mechanism may be located in a lower position, increasing the distance between phase and earth.

In some embodiments, the first transmission assembly comprises an actuating portion adapted to be driven to move when the withdrawable truck moves from the test position to the intermediate position; a pair of primary driving bars arranged under the withdrawable truck and pivotably coupled to the actuating portion to rotate about a first axis of the actuating portion with a movement of the actuating portion; and a pair of secondary driving bars arranged parallel to the first moveable cover and coupled to each other at a second axis between a first end coupled to the first moveable cover and a second end coupled to the primary driving bar, wherein the pair of secondary driving bars are operable to rotate about the second axis and to move the first moveable cover in response to an rotation of the primary driving bar. By using two pairs of driving bars, the first transmission assembly is simple in structure and assembly. Furthermore, the main portion of the first transmission assembly may be located under the withdrawable truck, increasing the distance between phase and earth.

In some embodiments, the first moveable cover comprises a second slot extending perpendicularly to the first and second axes and adapted to facilitate the first end to slide therein. With this arrangement, the structure of the shutter mechanism is further simplified.

In some embodiments, the first transmission assembly comprises a first pivot shaft extending along a third axis perpendicular to a first direction of a movement of the withdrawable truck and adapted to be driven to rotate about the third axis when the withdrawable truck moves from the test position to the intermediate position; a second pivot shaft extending along a fourth axis parallel to the first direction, the second pivot shaft coupled to the first pivot shaft to rotate about the fourth axis with an rotation of the first pivot shaft; a linkage assembly arranged parallel to the first moveable cover and coupled to the second pivot shaft and the first moveable cover to move the first moveable cover in response to an rotation of the second pivot shaft. By using the first and second pivot shafts and the linkage assembly coupled to the second pivot shaft and the first moveable cover, the operation and structure of the shutter mechanism may be simpler.

In some embodiments, the linkage assembly comprises a first link bar coupled to the second pivot shaft and operable to rotate with the second pivot shaft about the fourth axis; and a second link bar arranged pivotably between the first link bar and the first moveable cover to move the first moveable cover with an rotation of the first link bar. In this way, the structure and the assembly of the linkage assembly may be simplified.

In some embodiments, the first transmission assembly further comprises an actuating portion perpendicularly protruding from the first pivot shaft, the actuating portion adapted to be driven by the withdrawable truck to drive the first pivot shaft. By using the actuating portion perpendicularly protruding from the first pivot shaft, the first pivot shaft may be driven to rotate in a simple way.

In some embodiments, the shutter mechanism comprises an interlocking assembly arranged under the withdrawable truck and coupled to the actuating portion to prevent the first and second moveable covers from moving away from each other when the withdrawable truck is in the test position. In this way, the shutter mechanism may be safer while keeping the larger distance between phase and earth.

In some embodiments, the interlocking assembly comprises a first wedge member arranged along a first direction of a movement of the withdrawable truck and comprising a first bevel on an end away from the first moveable cover; and a second wedge member perpendicular to the first wedge member and comprising a blocking slots for blocking the actuating portion in the first direction when the withdrawable truck is in the test position, wherein when the withdrawable truck moves from the test position to the intermediate position, the second wedge member is operable to move with the actuating portion while moving along the first bevel in a second direction away from first wedge member to unblock the actuating portion. In this way, the interlocking assembly is more robust and less prone to failure. This makes the switchgear safer to maintain.

In some embodiments, the shutter mechanism further comprises an L-shaped slot for the actuating portion to slide therein and formed on a plate arranged between the withdrawable truck and the primary driving bars. This allows the further increased distance between phase and earth.

In some embodiments, the second transmission assembly comprises a pivot pin operable to slide along a guide fixedly arranged in the switchgear in a first direction of a movement of the withdrawable truck; a first bar coupled to the pivot pin and to the first moveable cover; and a second bar coupled to the pivot pin and to the second moveable cover. In this way, the second moveable cover may move with the first moveable cover in a simple and efficient way.

In second aspect, a switchgear comprising a shutter mechanism as mentioned above is provided.

It is to be understood that the Summary is not intended to identify key or essential features of embodiments of the present disclosure, nor is it intended to be used to limit the scope of the present disclosure. Other features of the present disclosure will become easily comprehensible through the description below.

### BRIEF DESCRIPTION OF THE DRAWINGS

The above and other objectives, features and advantages of the present disclosure will become more apparent through more detailed depiction of example embodiments of the present disclosure in conjunction with the accompanying drawings, wherein in the example embodiments of the present disclosure, same reference numerals usually represent same components.
FIG. 1 shows perspective view of a portion of a switchgear when the withdrawable truck is in a test position according to embodiments of the present disclosure;
FIG. 2 shows perspective view of a portion of a switchgear when the withdrawable truck is in a work position according to embodiments of the present disclosure;
FIG. 3 shows perspective view of a shutter mechanism according to embodiments one embodiment of the disclosure;
FIG. 4 shows perspective view of a shutter mechanism according to embodiments one embodiment of the disclosure;
FIG. 5 shows perspective view of a shutter mechanism according to one another embodiment of the disclosure;
FIG. 6 shows perspective view of a shutter mechanism when the withdrawable truck is in the test position according to embodiments of the disclosure;
FIG. 7 shows perspective view of a shutter mechanism when the withdrawable truck is in the work position according to embodiments of the disclosure;
FIG. 8 shows perspective view of a shutter mechanism when the withdrawable truck is in the test position according to some embodiments of the disclosure;
FIG. 9 shows perspective view of a shutter mechanism when the withdrawable truck is in the work position according to other embodiments of the disclosure;
FIG. 10 shows perspective view of an interlocking assembly when the withdrawable truck is in the test position according to embodiments of the disclosure;
FIG. 11 shows perspective view of an interlocking assembly when the withdrawable truck is in the work position according to embodiments of the disclosure;
FIG. 12 shows perspective view of a shutter mechanism when the withdrawable truck is in the test position according to embodiments of the disclosure;
FIG. 13 shows perspective view of a shutter mechanism when the withdrawable truck is in the work position according to embodiments of the disclosure;
FIG. 14 shows perspective view of a shutter mechanism when the withdrawable truck is in the test position according to embodiments of the disclosure; and
FIG. 15 shows perspective view of a first or second moveable cover according to embodiments of the disclosure.

Throughout the drawings, the same or similar reference symbols are used to indicate the same or similar elements.

### DETAILED DESCRIPTION

Embodiments of the present disclosure will now be discussed with reference to several example embodiments. It is to be understood these embodiments are discussed only for the purpose of enabling those skilled persons in the art to better understand and thus implement the present disclosure, rather than suggesting any limitations on the scope of the subject matter.

As used herein, the term "comprises" and its variants are to be read as open terms that mean "comprises, but is not limited to." The term "based on" is to be read as "based at least in part on." The term "one embodiment" and "an embodiment" are to be read as "at least one embodiment." The term "another embodiment" is to be read as "at least one other embodiment." The terms "first," "second," and the like may refer to different or same objects. Other definitions, explicit and implicit, may be comprised below. A definition of a term is consistent throughout the description unless the context clearly indicates otherwise.

In the conventional solution, a driving assembly and a transmission mechanism of a shutter mechanism arranged in a switchgear are commonly arranged on the sides of the withdrawable truck. In conjunction with the interlocking assembly, this kind of coupling structure requires a large space to assemble. In addition, such driving assembly and transmission mechanism are accessible to the user. That is, the user may open the covers manually by operating the transmission mechanism or driving assembly directly, reducing the safety of the switchgear.. Furthermore, the conventional shutter mechanism causes the inevitable complicated structure of the shutter mechanism and small distance between phase and earth, causing dielectric problem especially in narrow space. Moreover, such a complicated structure and small distance result in a risk of causing a short circuit or the like, which reduces the safety of the switchgear.

Furthermore, the complicated structure makes assembly of the shutter mechanism time consuming and prone to failure. For example, the interlocking assembly of the conventional shutter mechanism often fails due to the complicated structure and assembly process, resulting in safety risks. In addition, the complicated structure of the conventional shutter mechanism occupies a large space in the switchgear that is already limited, which also causes inconvenience to maintenance and repair.

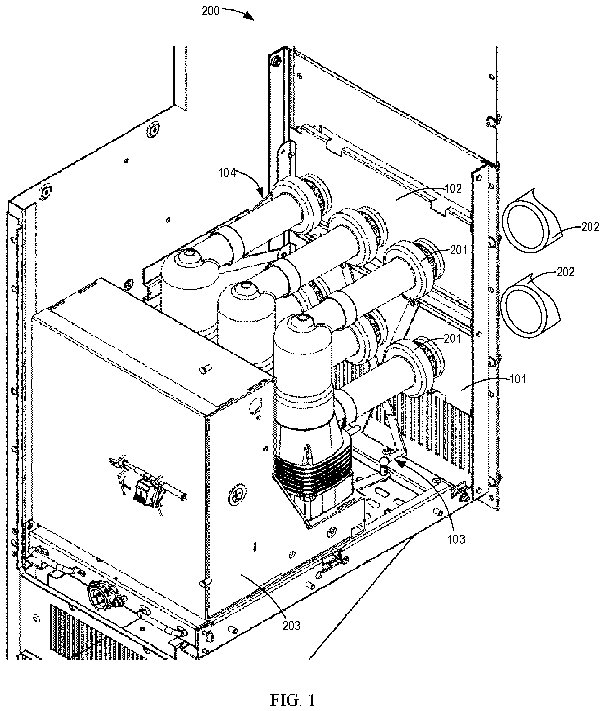

In order to at least partially address the above and other potential problems, embodiments of the present disclosure provide a shutter mechanism for the switchgear. Now some example embodiments will be described with reference to FIGs. 1-15.

As shown, the shutter mechanism 100 comprises two moveable covers, namely, a first moveable cover 101 and a second moveable cover 102. In some embodiments, the first and second moveable covers 101, 102 may be referred to as a lower shutter and a upper shutter, respectively. In some alternative embodiments, the first and second moveable covers 101, 102 may be referred to as other suitable barriers that can shield the fixed contacts when the withdrawable truck 203 is in the test position.

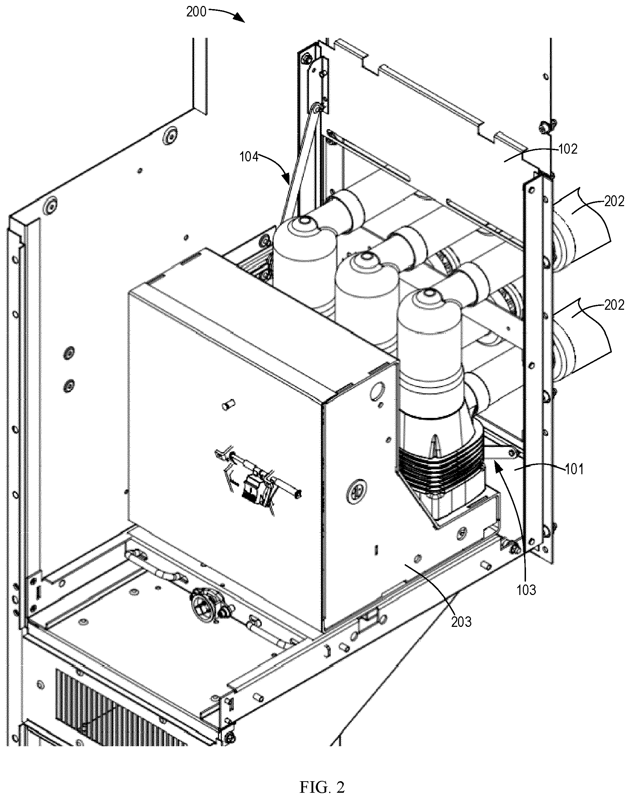

The shutter mechanism 100 further comprises a transmission mechanism 10 coupled to the first and second moveable covers 101, 102. The first and second moveable covers 101, 102 are arranged between fixed contacts 202 and moveable contacts 201 of a circuit breaker in the switchgear 200, as shown in FIGs. 1 and 2. The circuit breaker is located on a withdrawable truck 203 to move with the withdrawable truck 203. The withdrawable truck 203 can be moved between a work position where the moveable contacts 201 are inserted into the fixed contacts 202 and a test position where the moveable contacts 201 are pulled out of the fixed contacts 202.

The transmission mechanism 10 can be actuated by a movement of the withdrawable truck 203 to drive the first and second moveable covers 101, 102 to move close to each other to a block position or move away from each other to a unblock position. Specifically, when the withdrawable truck 203 moves to the test position, the first and second moveable covers 101, 102 move to the block position to block the fixed contacts 202. When the withdrawable truck 203 moves from the test position to an intermediate position between the test and work positions, the first and second moveable covers 101, 102 move to the unblock position to unblock the fixed contacts. In this way, with the further movement of the withdrawable truck 203 from the intermediate positon to the work position, the moveable contacts 201 can be inserted into the fixed contacts 202.

Different from any conventional solutions, the transmission mechanism 10 is arranged at least in part below the withdrawable truck 203. For example, the transmission mechanism 10 is arranged below a medium plate under the withdrawable truck 203. In this way, the transmission mechanism 10 becomes inaccessible to the user compared to any conventional solutions.

That is, the transmission mechanism 10 is inaccessible to the user when the first and second moveable covers 101, 102 are in the test position. In this way, the first and second moveable covers 101, 102 cannot be opened by operating the transmission mechanism directly or by manually pushing the first and second moveable covers 101, 102, increasing the safety of the switchgear 200. In addition, such a structure of the shutter mechanism 100 may be located in a lower position, increasing the distance between phase and earth.

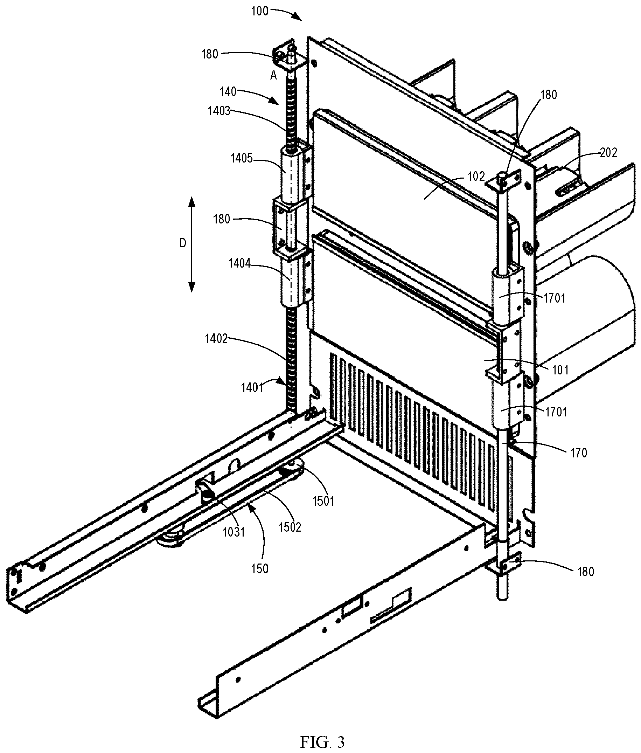

In some embodiments, the transmission mechanism 10 may comprise an actuating portion 1031, as shown in FIG. 3. The actuating portion 1031 may be arranged below the withdrawable truck. When the withdrawable truck 203 moves from the test position to the intermediate position, the actuating portion 1031 may be actuated to rotate by the withdrawable truck 203. For example, a driving member 108 may be arranged under the withdrawable truck 203 and the actuating portion 1031 may be driven to rotate by being pushed by the driving member 108.

In some alternative embodiments, the actuating portion 1031 may also be actuated by a motor (not shown). For example, when the withdrawable truck 203 moves from the test position to the intermediate position, a sensor (not shown) may detect the movement of the withdrawable truck 203. The motor may drive the actuating portion 1031 to rotate in response to the detecting of the movement of the withdrawable truck 203.

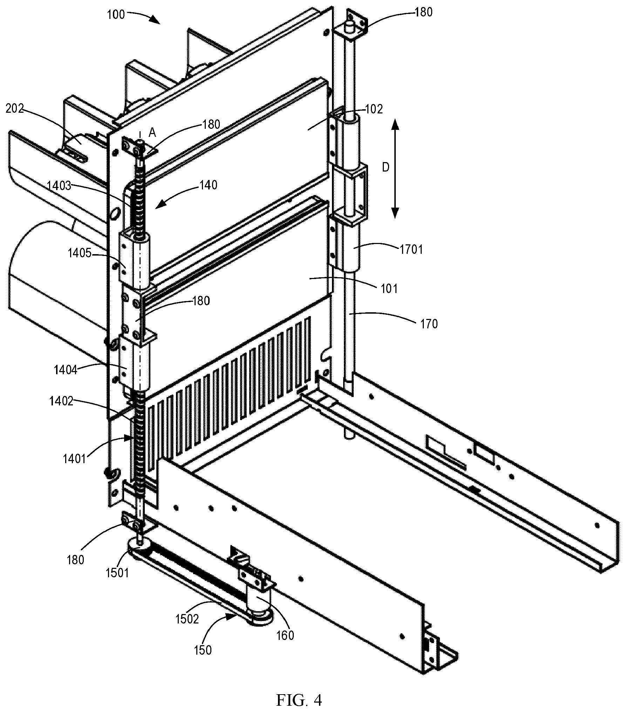

The transmission mechanism 10 may further comprise a performing portion 140 coupled to the actuating portion 1031 and the first and second moveable covers 101, 102. As shown in FIGs. 3 and 4, the performing portion 140 extends along its own axis (referred to as a rotating axis A) which is parallel to a moving direction D of the first and second moveable covers 101, 102. With the rotation of actuating portion 1031, the performing portion 140 may rotate to drive the first and second moveable covers 101, 102. In this way, the first and second moveable covers 101, 102 may be driven to move with a simple transmission mechanism 10.

In some embodiments, the performing portion 140 may have a pressure angle. The pressure angle is an acute angel between the direction of the force and the direction of motion of the performing portion 140. The pressure angle may be set large enough to prevent the performing portion 140 from being rotated by driving the first and second moveable covers 101, 102 directly. This improves the safety of the shutter mechanism 100.

In some embodiments, the performing portion 140 may comprise a lead screw 1401, as shown in FIGs. 3-5. The lead screw 1401 may comprise a first threaded portion 1402 and a second threaded portion 1403. The first moveable cover 101 may be coupled to the first threaded portion 1402 via a first bushing 1404 and the second moveable cover 102 may be coupled to the second threaded portion 1403 via a second bushing 1405.

In some embodiments, as shown in FIGs. 3 and 4, the first and second threaded portions 1402, 1403 may be formed on one lead screw 1401 and have opposite hands. That is, the first threaded portion 1402 may have a right hand thread and the second threaded portion 1403 may have a left hand thread. In this way, in response to the rotation of the lead screw 1401, the first and second moveable covers 101, 102 may be driven to move to opposite directions.

The lead screw 1401 may be arranged on one side of the first and second moveable covers 101, 102 in a direction perpendicular to the moving direction D. There may be guide rail 170 arranged on another side of the first and second moveable covers 101, 102. The first and second moveable covers 101, 102 may be coupled to the guide rail 170 directly or via sleeves 1701.

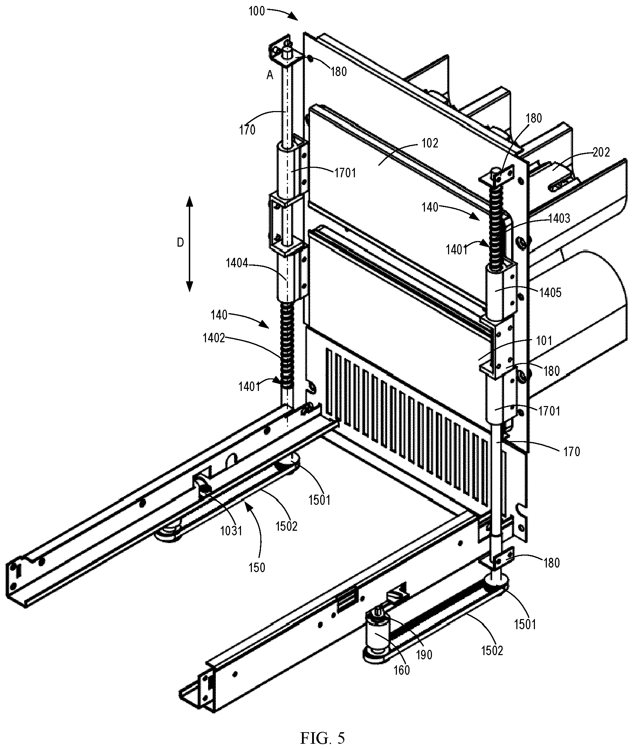

In some alternative embodiments, as shown in FIG. 5, the first and second threaded portions 1402, 1403 may also be formed on two separate lead screws 1401. The two lead screws 1401 may be arranged on opposite sides of the first and second moveable covers 101, 102 and aligned with the first and second moveable covers 101, 102, respectively. There may be guide rails 170 arranged on the side of the first and second moveable covers 101, 102 opposite the side on which the lead screw 1401 is arranged. The lead screw1401 and the guide rail 170 on the same side may be integrally formed. In some alternative embodiments, the lead screw1401 and the guide rail 170 on the same side may be separate parts.

Each of the two lead screws 1401 may be driven by the respective actuating portion 1031. That is, in such alternative embodiments, there may be two actuating portions 1031 arranged on opposite sides of the withdrawable truck 203. When the withdrawable truck 203 moves from the test position to the intermediate position, the two actuating portions 1031 may be simultaneously driven to rotate in opposite directions to drive the two lead screws 1401 to rotate in opposite directions. In this way, the first and second moveable covers 101, 102 may be driven to move in opposite directions with the rotation of the two lead screws with same hand.

In order to improve the stability of the shutter mechanism 100, in some embodiments, the lead screw 1041 and the guide rail 170 may be mounted in the switchgear 200 with their respective ends and/or middle parts being mounted on the fixed wall of the switchgear 200 via supports 108, as shown in FIGs. 3 and 4.

In some embodiments, the transmission mechanism 10 may further comprise a transmission portion 150 coupled to the actuating portion 1031 and the performing portion 140 and a gearbox 160 coupled to the actuating portion 1031 and the transmission portion 150. The gearbox 160 may be used to change the transmission ratio. In this way, the actuating portion 1031 only needs to be rotated by a small angle to cause the lead screw 1041 to rotate a plurality of turns to drive the first and second moveable covers 101, 102 in position. This reduces the space occupied by the transmission mechanism 10.

The transmission portion 150 and the gearbox 160 may be arranged below the withdrawable truck 203. In some embodiments, the transmission portion 150 may comprise a pair of pulleys 1501 and a belt 1502 arranged therebetween. One pulley 1501 is coupled to the actuating portion 1031 via the gearbox 160 and another pulley 1501 is coupled to the lead screw 1401 coaxially.

It is to be understood that the above embodiments of the transmission portion 150 are described merely for illustration, without suggesting any limitations as to the scope of the present disclosure. It is possible to use any other suitable structures or arrangements. For example, in some alternative embodiments, the transmission portion 150 may adopt gear and rack mechanisms.

In order to return the actuating portion 1031 to an initial position when the withdrawable truck 203 moves to the test position, in some embodiments, there may be a reset component 190 coupled to the actuating portion 1031. For example, in some embodiments, the reset component 190 may be a spring arranged between the actuating portion 1031 and a fixed portion of the switchgear 200. With this arrangement, the shutter mechanism 100 can return its initial position when the withdrawable truck 203 is in the test position. When the withdrawable truck 203 move from the test position to the intermediate position, the riving member 108 may overcome a force of the reset component to drive the actuating portion (1031) to rotate.

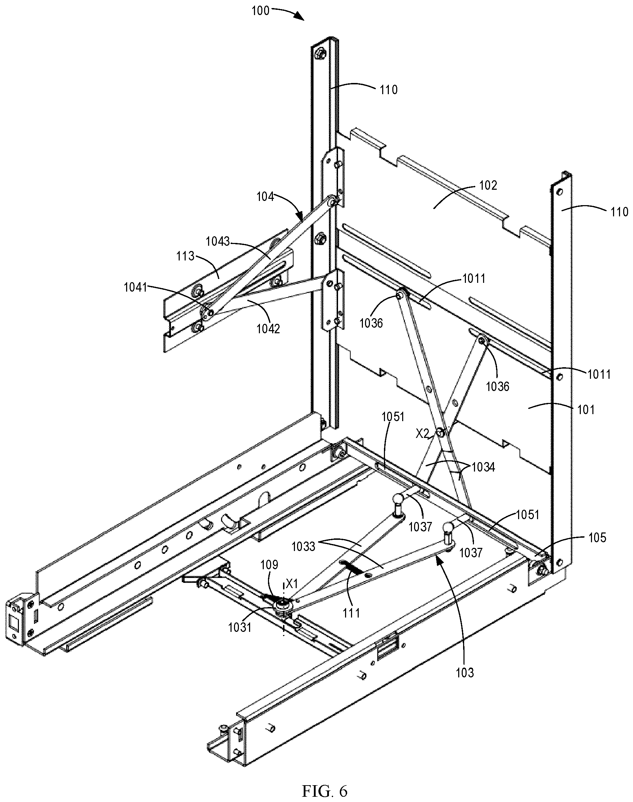

In some alternative embodiments, as shown in FIGs. 6-14, the transmission mechanism 10 may comprise a first transmission assembly 103 and a second transmission assembly 104 for driving the first and second moveable covers 101, 102, respectively. The first and second moveable covers 101, 102 are arranged between fixed contacts 202 and moveable contacts 201 of a circuit breaker in the switchgear 200. The circuit breaker is located on a withdrawable truck 203 to move with the withdrawable truck 203.

Different from any conventional solutions, the first transmission assembly 103 is merely coupled to the first moveable cover 101. In operating, in response to a movement of the withdrawable truck 203, the first transmission assembly 103 is actuated to move the first moveable cover 101. In this way, the complexity of the structure can be reduced. Moreover, the distance between phase and earth can be increased, which increases the safety of the switchgear 100.

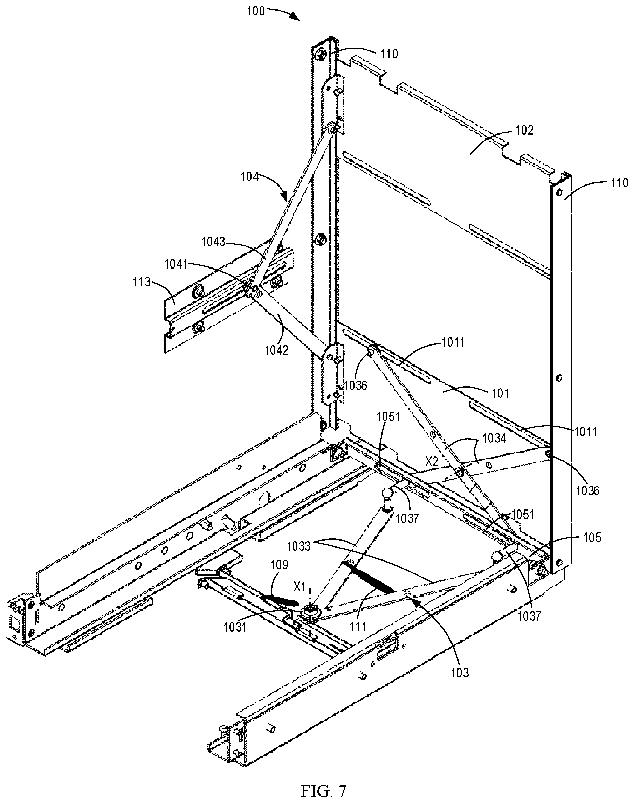

According to embodiments of the present disclosure, the movement of the second moveable cover 102 is driven by the movement of the first moveable cover 1201 via the second transmission assembly 104. Specifically, the second transmission assembly 104 is arranged between and coupled to the first and second moveable covers 101, 102, as shown in FIGs. 6 and 7. In this way, the second transmission can be actuated by a movement of the first moveable cover 101, thereby driving the second moveable cover 102 to move to block (when in a block position as shown in FIG. 6) or unblock the fixed contacts (when in a unblock position as shown in FIG. 7).

By arranging the portions of the shutter mechanism 100 under the withdrawable truck 203, the shutter mechanism 100 can efficiently increase the distance between phase and earth, thereby increasing the safety of the switchgear 200. Furthermore, the structure of the shutter mechanism 100 is simplified and occupies a small space. The simplified structure further reduces the difficulty and cost of the assembly. In this way, the shutter mechanism 100 is more reliable due to ease of the assembly.

As shown in FIG. 6, when the withdrawable truck 203 moves to the test position, the first and second transmission assemblies 103, 104 may drive the first and second moveable covers 101, 102 to move towards each other. As such, the fixed contacts 202 are blocked. In this way, maintenance personnel would not be at risk of electric shock. After the maintenance is finished, the withdrawable truck 203 may be pushed to move from the test position to the work position.

During this process, the first and second transmission assemblies 103, 104 may drive the first and second moveable covers 101, 102 to move away from each other. When the withdrawable truck 203 moves to an intermediate position between the test position and the work position, the first and second moveable covers 101, 102 may move to the unblock position as shown in FIGs. 2 and 7. In this way, the fixed contacts 202 are exposed to the moveable contacts 201 when the withdrawable truck 203 moves to the intermediate position. There is no threat to the maintenance personnel at this time because the withdrawable truck 203 and the circuit breaker constitute a barrier between the maintenance personnel and the fixed contacts 202.

The first transmission assembly 103 may drive the first moveable cover 101 to move in various ways. For example, in some embodiments as shown in FIGs. 6 and 7, the first assembly 103 may comprise an actuating portion 1031, a pair of primary driving bars 1033 and a pair of secondary driving bars 1034. The actuating portion 1031 may be driven to move, for example by the withdrawable truck 203, when the withdrawable truck 203 moves from the test position the intermediate position.

The pair of primary driving bars 1033 and the pair of secondary driving bars 1034 may have a cross structure, like a scissor. That is, each of the pair of primary driving bars 1033 or the pair of secondary driving bars 1034 may rotate about an axis. Specifically, the pair of the primary driving bars 1033 may rotate relative to each other about an axis, namely a first axis X1, and the pair of secondary driving bars 1034 may rotate relative to each other about a second axis X2 between two ends of each of the secondary driving bars 1034.

In some embodiments, the first axis X1 may be the axis of the actuating portion 1031. That is, the pair of the actuating portion 1031 may be coupled to the actuating portion 1031. Furthermore, the first axis X1 may be perpendicular to the second axis X2. For example, in some embodiments, the pair of the primary driving bars 1033 may be arranged under the withdrawable truck 203, and the pair of secondary driving bars 1034 may be arranged parallel to and coupled to the first moveable cover 101 at one end.

The another end (referred to as a second end 1037 below) of each of the secondary driving bars 1034 may be coupled to each of the primary driving bars 1033 by using universal joints or the like. In this way, when the actuating portion 1031 moves with the movement of the withdrawable truck 203 in a moving direction (referred to as a first direction D1 below), the pair of the primary driving bars 1033 may rotate relative to each other about the first axis X1, and thus the pair of secondary driving bars 1034 rotate relative to each other about the second axis X2.

Due to such a cross structure of the pair of secondary driving bars 1034, as shown in FIGs. 6 and 7, the rotation of the secondary driving bars 1034 relative to each other reduces the distance between ends of different secondary driving bars 1034. As such, the first and second moveable covers 101, 102 may move away from each other to the unblock position as shown in FIG. 7. Such structures of the pair of primary driving bars 1033 and the pair of secondary driving bars 1034 reduce the assembly difficulty and improve the stability of the shutter mechanism 100.

In order to further improve the stability of the first transmission assembly 103, in some embodiments, a fixed beam 105 may be fixedly arranged below the first moveable cover 101, as shown in FIG. 7. The fixed beam 105 may be provided with one through slot or two separate slots (referred to as a first slot 1051 below) for the second end 1037 to slide therein.

In some embodiments, there may be an extension spring 111 arranged between the pair of primary driving bars 1033. The extension spring 111 may facilitate the movement of the actuating portion 1031 when the withdrawable truck 203 moves from the intermediate position to the test position. In this way, the actuating portion 1031 and the first and second driving bars 1033, 1034 may return to their initial positions when the withdrawable truck in the test position.

As shown in FIGs. 6 and 7, in some embodiments, the first end 1036 may be arranged in one through slot or two separate slots (referred to as a second slot 1011 below) formed on the first moveable cover 101. The second slot 1011 extends perpendicularly to the first and second axes X1, X2. As such, the first end 1036 of the pair of primary driving bars 1033 may slide and pivot in the second slot 1011.

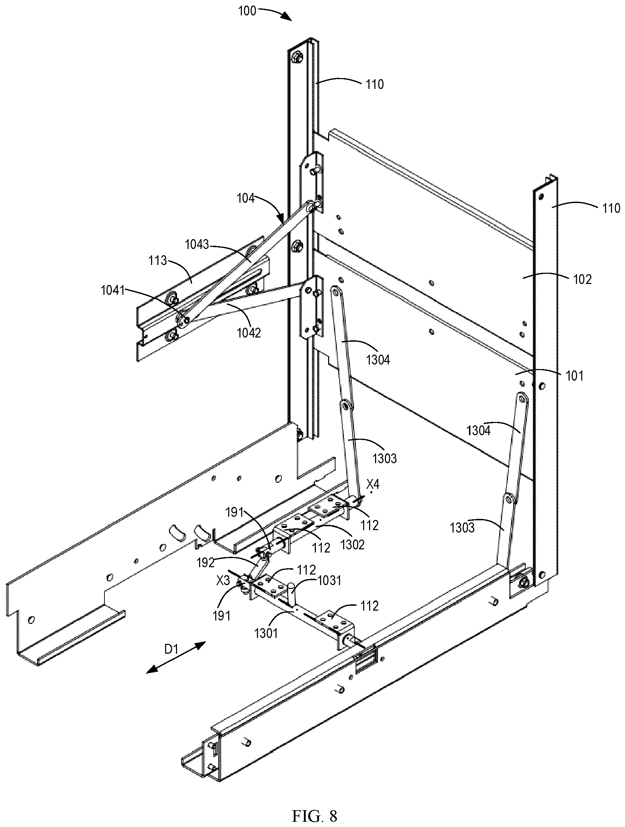

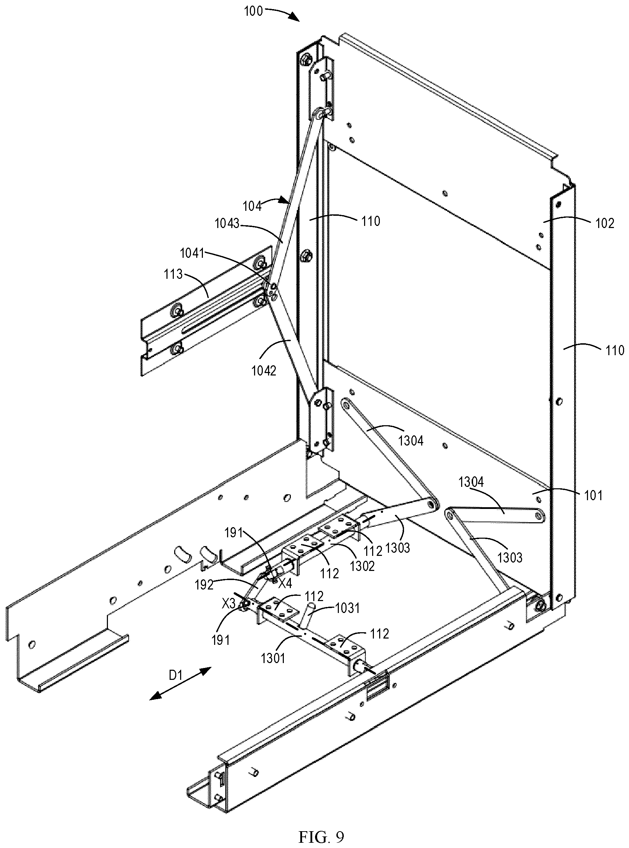

It is to be understood that the above embodiments of the first transmission assembly 103 are described merely for illustration, without suggesting any limitations as to the scope of the present disclosure. It is possible to use any other suitable structures or arrangements. For example, in some alternative embodiments, as shown in FIGs. 8 and 9, the first transmission assembly 103 may comprise a linkage assembly and two pivot shafts, namely, a first pivot shaft 1301 and a second pivot shaft 1302.

The first pivot shaft 1301 extends along its own axis, namely, a third axis X3. The third axis X3 may be perpendicular to the first direction D1. The second pivot shaft 1302 extends along its own axis, namely, a fourth axis X4. The fourth axis X4 is parallel to the first direction D1. The first and second pivot shafts 1301, 1302 are coupled to each other via a universal joint 191 or a similar element. The linkage assembly is arranged parallel to the first moveable cover 101.

In some embodiments, the first and second pivot shafts 1301, 1302 may be connected with each other via a pair of universal joints 191 and a rod 192, as shown in FIGs. 8 and 9. In this way, the first and second pivot shafts 1301, 1302 perpendicular to each other can be rotated together with a simple structure.

It is to be understood that the above embodiments of the connecting manners of the first and second pivot shafts 1301, 1302 are described merely for illustration, without suggesting any limitations as to the scope of the present disclosure. It is possible to use any other suitable structures or arrangements. For example, in some alternative embodiments, the first and second pivot shafts 1301, 1302 may be coupled with each other by using bevel gears.

In some embodiments, one end of the linkage assembly is coupled to the second pivot shaft 1302 without a relative moment therebetween. That is, the linkage assembly is fixed on the second pivot shaft 1302. Another end of the linkage assembly is coupled to the first moveable cover 101. In this way, when the withdrawable truck 203 moves from the test position to the intermediate position, the first pivot shaft 1301 may be driven to rotate about the third axis X3 and thus the second pivot shaft 1302 may rotate about the fourth axis X4 with an rotation of the first pivot shaft 1031. The rotation of the second pivot shaft 1302 may drive the first moveable cover 101 to move via the linkage assembly.

Such alternative embodiments allow the further simplified structure of the first transmission assembly 103. Furthermore, in order to improve smoothness of the rotations of the first and second pivot shafts 1301, 1302, brackets 112 may be fixedly arranged in the switchgear 200, for example under the withdrawable truck 203. The first and second pivot shafts 1301, 1302 may extend through the holes form in the brackets 112. In this way, the rotations of the first and second pivot shafts 1301, 1302 about their own axes are less prone to sway, improving the stability of the first transmission assembly 103.

In some embodiments, the linkage assembly may have a structure in which two bars, namely, a first link bar 1303 and a second link bar 1304, are hinged together at the ends. The first link bar 1303 may be coupled to the second pivot shaft 1302 and may rotate with the second pivot shaft 1302 about the fourth axis X4. The second link bar 1304 is coupled to the first moveable cover 101. In this way, the first moveable cover 101 may be driven to move with a rotation of the first link bar 1303.

In some embodiments, there may be one set of the first and second pivot shafts 1301, 1302 and the linkage assembly arranged under the withdrawable truck 203 and adjacent to the first moveable cover 101. The set of the above shafts and assembly may be arranged on the left side or the right side relative to a midline in the first direction D1. In some alternative embodiments, there also may be a pair of the first and second pivot shafts 1301, 1302 and the linkage assemblies arranged symmetrically along the midline in the first direction D1. As such, the first and second moveable covers 101, 102 may be driven more smoothly and uniformly.

In order to drive the first pivot shaft 1301 to rotate when the withdrawable truck 203 move from the test position to the intermediate position, in some embodiments, the actuating portion 1031 may take the form of perpendicularly protruding from the first shaft 1301. As such, the actuating portion 1031 may be driven by the withdrawable truck 203 to rotate to drive the first pivot shaft to rotate 1301.

When the withdrawable truck 203 moves to the intermediate position, the actuating portion 1031 may rotate to a position substantially parallel to the first direction D1. In this way, the actuating portion 1031 will not hinder the further movement of the withdrawable truck 203 from the intermediate position to the work position. In some embodiments, a return component, such as a torsional spring (not shown), may be provided on the first pivot shaft 1301 or other suitable positions, thereby allowing the first transmission assembly 103 return its initial positon when the withdrawable truck 203 in the test position.

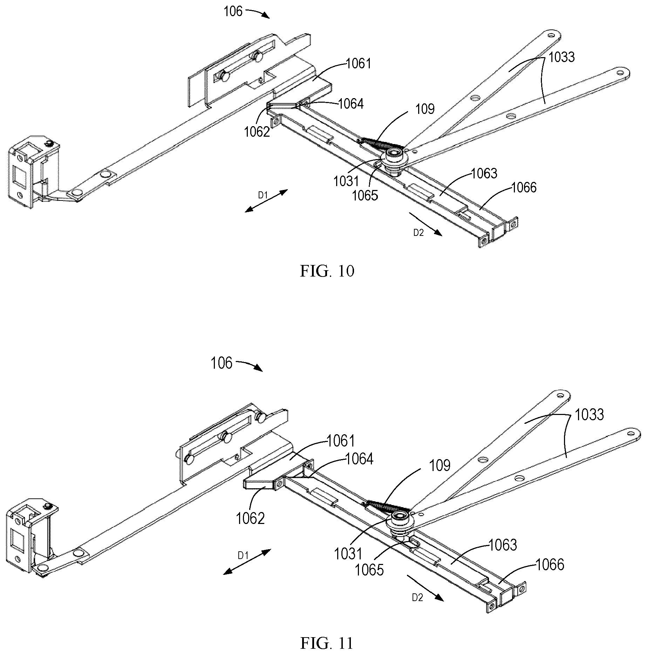

In some embodiments, as shown in FIGs. 10 and 11, in order to prevent the first and second moveable covers 101, 102 from opening manually for example by external forces applied on the first and second moveable covers 101, 102, an interlocking assembly 106 may be provided. The interlocking assembly 106 may be arranged under the withdrawable truck 203 so as not to affect the distance between phase and earth.

FIG. 10 shows perspective view of the interlocking assembly 106 when the withdrawable truck 203 is in the test position, and FIG. 11 shows perspective view of the interlocking assembly 106 when the withdrawable truck 203 is in the work position. As shown, in some embodiments, the interlocking assembly 106 may comprise two wedge members, namely, a first wedge member 1061 and a second wedge member 1063.

The first wedge member 1061 may be arranged along the first direction D1. The first wedge member 1061 may comprise a bevel (referred to as first bevel 1061 below) on an end away from the first moveable cover 101. The second wedge member 1063 may be arranged perpendicularly to and adjacent to the first wedge member 1061. The second wedge member 1063 may comprise a blocking slot 1065. The blocking slot 1065 may block the actuating portion 1031 in the first direction D1 when the withdrawable truck is in the test position, as shown in FIG. 10.

In this way, even if there are external forces applied on the first or second moveable cover 101, 102, the first and second moveable covers 101, 102 would not be moved due to the blocking slots 1065. This physical barrier to the actuating portion 1031 provides a reliable interlocking assembly which is less prone to failure, which improves the reliability of the shutter mechanism 100.

When the withdrawable truck 203 moves from the test position to the intermediate position as shown in FIG. 11, the second wedge member 1063 may move with the actuating portion 1031, while moving along the first bevel 1062 in a second direction D2 perpendicular to and away from the first wedge member 1061. As such, the actuating portion 1031 may move relative to the second wedge member 1063 to a position where the blocking slots cannot block it, as shown in FIG. 11. In this way, the withdrawable truck 203 can move forward to the work position.

In some embodiments, an end of the second wedge member 1063 adjacent to the first wedge member 1061 may be provided with a bevel, namely, a second bevel 1064. The second bevel 1064 may be constructed to have a same inclined angle as the first bevel 1062 such that the second bevel 1064 may be opposite to and contact the first bevel 1062 when the withdrawable truck 203 is in the test position. When the withdrawable truck 203 moves from the test position to the intermediate position, the second bevel 1064 may slide along the first bevel 1062.

It is to be understood that the above embodiments of the second wedge member 1063 with the second bevel 1064 are described merely for illustration, without suggesting any limitations as to the scope of the present disclosure. It is possible to use any other suitable structures or arrangements. For example, in some alternative embodiments, the end of the second wedge member 1063 adjacent to the first wedge member 1061 may be a round or a triangle or the like.

In some embodiments, as shown in FIGs. 10 and 11, a guiding member 1066 comprising a sliding groove may be provided. The sliding groove extends along the second direction D2, so that the second wedge member 1061 may slide in the sliding groove to unblock the actuating portion 1031.

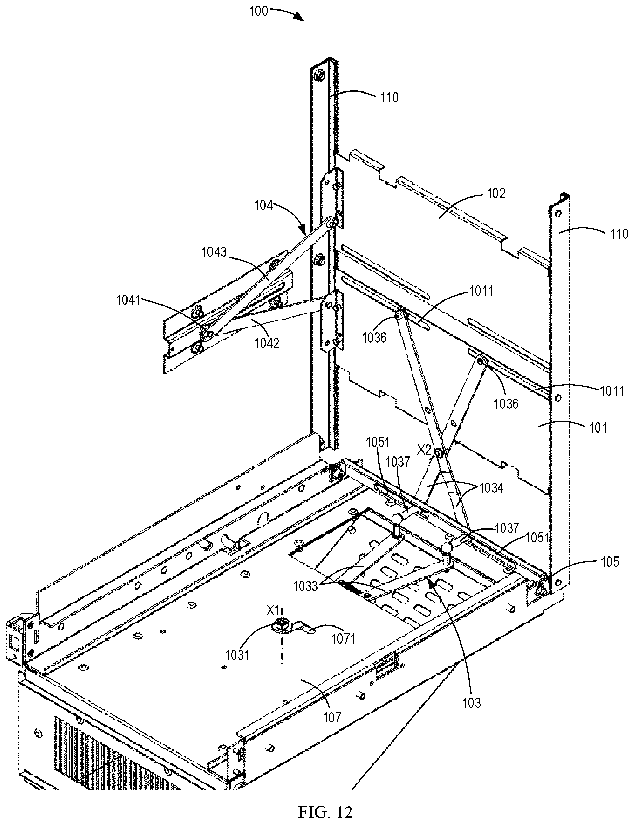

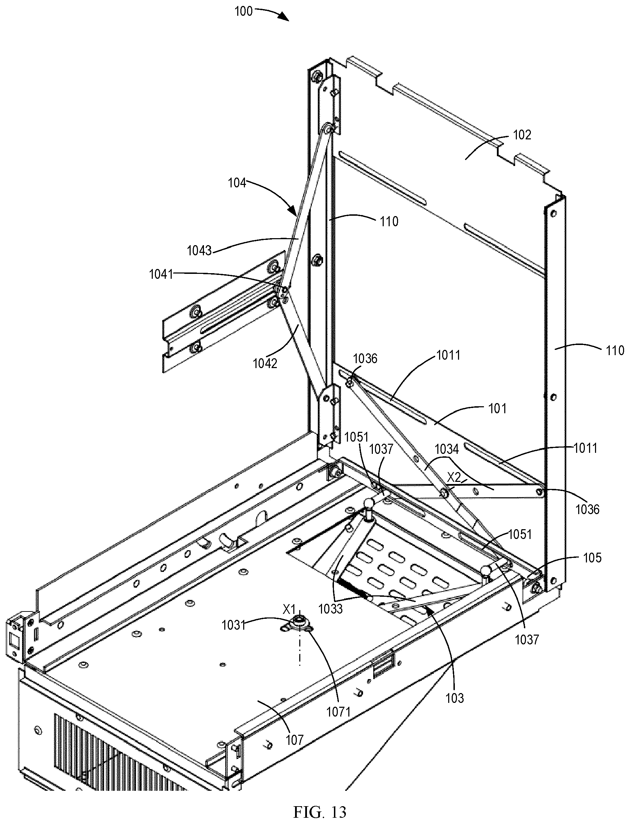

In order to ensure that the direction of movement of the actuating portion 1031 is not affected by the movement of the second wedge member 1063, in some embodiments, a plate 107 arranged between the withdrawable truck 203 and the primary driving bars 1033 may be provide with a slot 1071 for the actuating portion 1031 to slide therein, as shown in FIGs. 12 and 13. The plate 107 may be an already existing plate, for example the medium plate of the switchgear 200 arranged under the withdrawable truck 203. In some embodiments, the plate 107 may also be a plate newly provided between the withdrawable truck 203 and the primary driving bars 1033.

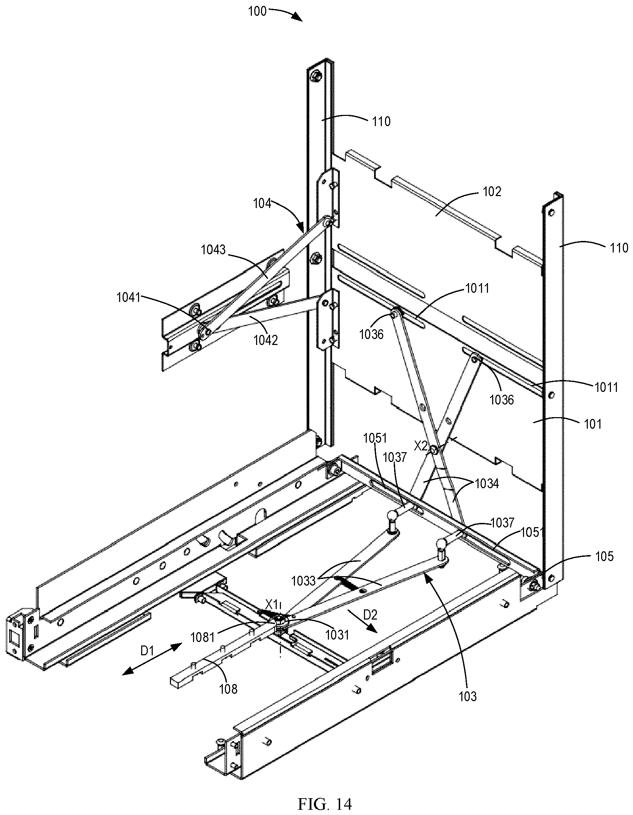

In some embodiments, the actuating portion 1031 may be driven by a driving member 108 fixedly arranged under the bottom of the withdrawable truck 203, as shown in FIG. 14. With this arrangement, when the withdrawable truck 203 moves from the test position to the intermediate position, the actuating portion 1031 may push the actuating portion 1031 to move along the slot 1071, or rotate relative to the slot 1071 in the case where the actuating portion 1031 perpendicularly protrudes from the first shaft 1301, as mentioned with reference to the FIGs. 8 and 9.

In order not to hinder the further movement of the withdrawable truck 203 from the intermediate position to the work position, an end of the driving member 108 adjacent to the actuating portion 1031 may be a bevel end 1081, as shown in FIG. 14. With this bevel end 1081, when the withdrawable truck 203 moves from the intermediate position to the work position, the actuating portion 1031 may be pushed by the bevel end 1081 to move along the slot 1071 in the second direction D2.

Accordingly, the slot 1071 formed on the plate 107 may be an L-shaped slot 1071. The L-shaped slot 1071 allows the actuating portion 1031 to move in the first direction D1 when the withdrawable truck 203 moves from the test position to the intermediate position, and move in a second direction D2 when the withdrawable truck 203 moves from the intermediate position to the work position. The driving member 108 may have a length along the first direction D1, such that the actuating portion 1031 would not return to its initial position during the movement of the withdrawable truck 203 between the intermediate position and the work position. As to the case where the actuating portion 1031 is driven to rotate, the slot 1071 may be a straight slot allowing the actuating portion 1031 to rotate.

In some embodiments, a return spring 109 may be arranged between the guiding member 1066 and the first transmission assembly 103, so that the actuating portion 1031 may return to the position aligning with the driving member 108 in the first direction D1 when the withdrawable truck 203 moves from the intermediate position to the test position.

In some embodiments, the second transmission assembly 104 may comprise a pivot pin 1041 and a first bar 1042 and a second bar 1043 coupled to the pivot pin 1041 at each end, as shown in FIGs. 6-8. The pivot pin 1041 may slide along a guide 113 fixedly arranged in the switchgear 200 in the first direction D1. The first bar 1042 may be coupled to the first moveable cover 101 via a bracket or directly. Similarly, the second bar 12043 may be coupled to the second moveable cover 102.

In this way, with the movement of the first moveable cover 101, the pivot pin 1041 may slide along the guide 113. With the movement of the pivot pin 1041 along the guide 113, the second bar 1043 rotates about the pivot pin 1041. As such, the first and second moveable covers 101, 102 may move towards or away from each other.

It is to be understood that the above embodiments of the second transmission assembly 104 are described merely for illustration, without suggesting any limitations as to the scope of the present disclosure. It is possible to use any other suitable structures or arrangements. For example, in some alternative embodiments, the second transmission assembly 104 may use other types of linkage mechanisms which may implement the above functions.

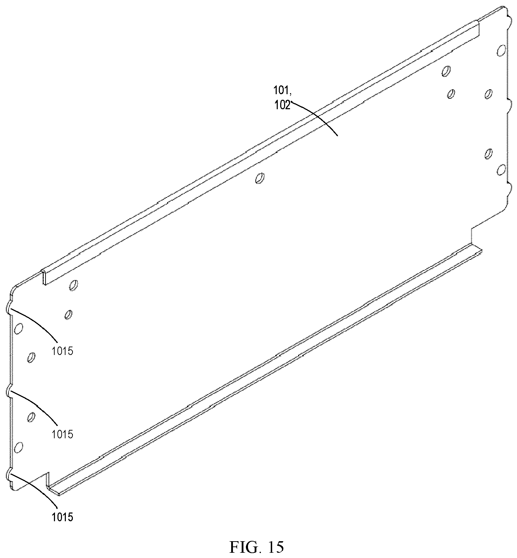

As shown in FIGs. 6-9, in some embodiments, a pair of cover guides 110 opposite to each other may be provided along a movement direction of the first and second moveable covers 101, 102. The cover guides 110 may facilitate the movement of the first and second moveable covers 101, 102 by allowing them to slide therein. In some embodiments, as shown in FIG. 15, portions of the first and second moveable covers 101, 102 arranged in the cover plates 110 are provided with protrusions 1015.

The protrusions 1015 may protrude from the edges along the direction parallel to the first and the second moveable covers 101, 102, as shown in FIG. 15. In some alternative embodiments, the protrusions may also protrude in a direction perpendicular to the first and the second moveable covers 101, 102. In this way, contact area between the first and the second moveable covers 101, 102 and the cover guides 110 may be reduced. As such, friction between the first and the second moveable covers 101, 102 and the cover guides 110 when sliding may be reduced, and thus the slide of the first or the second moveable cover 101, 102 may be smoother.

In sum, by using the shutter mechanism 100 according to embodiments of the present disclosure, the structure of the shutter mechanism 100 is simplified, resulting in an easy assembly, improved stability and smaller occupied space in the switchgear 100. Furthermore, with the shutter mechanism 100 according to embodiments of the present disclosure, a distance between phase and earth is efficiently increased, improving the safety of the shutter mechanism 100 and even the whole switchgear 200. Moreover, the interlocking assembly is more reliable by using the blocking slot 1065 to form the physical barrier to block the actuating portion 1031.

It should be appreciated that the above detailed embodiments of the present disclosure are only to exemplify or explain principles of the present disclosure and not to limit the present disclosure. Therefore, any modifications, equivalent alternatives and improvement, etc. without departing from the spirit and scope of the present disclosure shall be comprised in the scope of protection of the present disclosure. Meanwhile, appended claims of the present disclosure aim to cover all the variations and modifications falling under the scope and boundary of the claims or equivalents of the scope and boundary.

Embodiments of the present disclosure are described by the following numbered clauses:
1. A shutter mechanism (100) for a switchgear (200), comprising:
   a first moveable cover (101) and a second moveable cover (102) arranged between fixed contacts (202) and moveable contacts (201) of a circuit breaker on a withdrawable truck (203) of the switchgear (200); and
   a transmission mechanism (10) arranged at least in part below the withdrawable truck (203) and coupled to the first and second moveable covers (101, 102), the transmission mechanism (10) adapted to be actuated by a movement of the withdrawable truck (203) to drive the first and second moveable covers (101, 102) to
   move close to each other to a block position to block the fixed contacts (202) when the withdrawable truck (203) moves to a test position, and
   move away from each other to an unblock position to unblock the fixed contacts (202) when the withdrawable truck (203) moves from the test position to an intermediate position between the test position and a work position.
2. The shutter mechanism (100) of clause 1, wherein the transmission mechanism (10) comprises:
   an actuating portion (1031) arranged below the withdrawable truck (203) and adapted to be driven to rotate when the withdrawable truck (203) moves from the test position to the intermediate position; and
   a performing portion (140) coupled to the first and second moveable covers (101, 102) and extending along a rotating axis (A) parallel to a moving direction (D) of the first and second moveable covers (101, 102),
   wherein the performing portion (140) is operable to rotate with a rotation of the actuating portion (1031) to drive the first and second moveable covers (101, 102) to move between the block and unblock positions.
3. The shutter mechanism (100) of clause 2, wherein the transmission mechanism (10) further comprises:
   a transmission portion (150) coupled to the actuating portion (1031) and the performing portion (140) to cause the performing portion (140) to rotate with the actuating portion (1031); and
   a gearbox (160) coupled to the actuating portion (1031) and the transmission portion (150) to change a transmission ratio.
4. The shutter mechanism (100) of clause 2, wherein the performing portion (140) comprises a lead screw (1401) with a first threaded portion (1402) and a second threaded portion (1403);
   wherein the first moveable cover (101) is coupled to the first threaded portion (1402) via a first bushing (1404) and the second moveable cover (102) is coupled to the second threaded portion (1402) via a second bushing (1045) to move between the block and unblock positions in response to a rotation of the lead screw (1401).
5. The shutter mechanism (100) of clause 2, further comprising:
   a reset component (190) coupled to the actuating portion (1031) and adapted to drive the actuating portion (1031) to rotate back to an initial position when the withdrawable truck (203) moves from the intermediate position to the test position.
6. The shutter mechanism (100) of clause 2, wherein the performing portion (140) comprises a pressure angle configured to prevent the performing portion (140) from being rotated by driving the first and second moveable covers (101, 102) directly.
7. The shutter mechanism (100) of clause 1, the transmission mechanism (10) comprises:
   a first transmission assembly (103) arranged at least in part under the withdrawable truck (203) and coupled to the first moveable cover (101), the first transmission assembly (103) adapted to be actuated by a movement of the withdrawable truck (203) to move the first moveable cover (101); and
   a second transmission assembly (104) arranged between and coupled to the first and second moveable covers (101, 102), the second transmission assembly (104) adapted to be actuated by a movement of the first moveable cover (101) to drive the second moveable cover (102) to move between a block position and a unblock position in response to the movement of the withdrawable truck (203).
8. The shutter mechanism (100) of clause 7, wherein the first transmission assembly (103) comprises:
   an actuating portion (1031) adapted to be driven to move when the withdrawable truck (203) moves from the test position to the intermediate position;
   a pair of primary driving bars (1033) arranged under the withdrawable truck (203) and coupled to the actuating portion (1031) to rotate about a first axis (X1) of the actuating portion (1031) with a movement of the actuating portion (1031); and
   a pair of secondary driving bars (1034) arranged parallel to the first moveable cover (101) and coupled to each other at a second axis (X2) between a first end (1036) coupled to the first moveable cover (101) and a second end (1037) coupled to the primary driving bar (1033),
   wherein the pair of secondary driving bars (1034) are operable to rotate about the second axis (X2) and to move the first moveable cover (101) in response to an rotation of the primary driving bar.
9. The shutter mechanism (100) of clause 7, wherein the first transmission assembly (103) comprises:
   a first pivot shaft (1301) extending along a third axis (X3) perpendicular to a first direction (D1) of a movement of the withdrawable truck (203) and adapted to be driven to rotate about the third axis (X3) when the withdrawable truck (203) moves from the test position to the intermediate position;
   a second pivot shaft (1302) extending along a fourth axis (X4) parallel to the first direction (D1), the second pivot shaft (1302) coupled to the first pivot shaft (1301) to rotate about the fourth axis (X4) with an rotation of the first pivot shaft (1301); and
   a linkage assembly arranged parallel to the first moveable cover (101) and coupled to the second pivot shaft (1302) and the first moveable cover (101) to move the first moveable cover (101) in response to an rotation of the second pivot shaft (1302).
10. The shutter mechanism (100) of clause 9, wherein the linkage assembly comprises:
   a first link bar (1303) coupled to the second pivot shaft (1302) and operable to rotate with the second pivot shaft (1302) about the fourth axis (X4); and
   a second link bar (1304) arranged pivotably between the first link bar (1303) and the first moveable cover (101) to move the first moveable cover (101) with an rotation of the first link bar (1303).
11. The shutter mechanism (100) of clause 9, wherein the first transmission assembly (103) further comprises an actuating portion (1031) perpendicularly protruding from the first pivot shaft (1301), the actuating portion (1031) adapted to be driven by the withdrawable truck (203) to drive the first pivot shaft (1301).
12. The shutter mechanism (100) of clause 2, 8 or 11, further comprising:
   an interlocking assembly (106) arranged under the withdrawable truck (203) and coupled to the actuating portion (1031) to prevent the first and second moveable covers (101, 102) from moving away from each other when the withdrawable truck (203) is in the test position.
13. The shutter mechanism (100) of clause 12, wherein the interlocking assembly (106) comprises:
   a first wedge member (1061) arranged along a first direction (D1) of a movement of the withdrawable truck (203) and comprising a first bevel (1062) on an end away from the first moveable cover (101); and
   a second wedge member (1063) perpendicular to the first wedge member (1061) and comprising a blocking slots (1065) for blocking the actuating portion (1031) in the first direction (D1) when the withdrawable truck (203) is in the test position,
   wherein when the withdrawable truck (203) moves from the test position to the intermediate position, the second wedge member (1063) is operable to move with the actuating portion (1031) while moving along the first bevel (1062) in a second direction (D2) away from the first wedge member (1061) to unblock the actuating portion (1031) .
14. The shutter mechanism (100) of clause 13, further comprising:
   an L-shaped slot (1071) for the actuating portion (1031) to slide therein and formed on a plate (107) arranged between the withdrawable truck (203) and the primary driving bars (1033).
15. The shutter mechanism (100) of clause 7, wherein the second transmission assembly (104) comprises:
   a pivot pin (1041) operable to slide along a guide (113) fixedly arranged in the switchgear (200) in a first direction (D1) of a movement of the withdrawable truck (203);
   a first bar (1042) coupled to the pivot pin (1041) and to the first moveable cover (101); and
   a second bar (1043) coupled to the pivot pin (1041) and to the second moveable cover (102).
16. A switchgear (400) comprising a shutter mechanism (100) of any of clauses 1-15.

## Claims

1. A shutter mechanism (100) for a switchgear (200), comprising:
a first moveable cover (101) and a second moveable cover (102) configured to be arranged between fixed contacts (202) and moveable contacts (201) of a circuit breaker on a withdrawable truck (203) of the switchgear (200); and
a transmission mechanism (10) configured to be arranged at least in part below the withdrawable truck (203) and coupled to the first and second moveable covers (101, 102), the transmission mechanism (10) adapted to be actuated by a movement of the withdrawable truck (203) to drive the first and second moveable covers (101, 102) to
move close to each other to a block position to block the fixed contacts (202) when the withdrawable truck (203) moves to a test position, and
move away from each other to an unblock position to unblock the fixed contacts (202) when the withdrawable truck (203) moves from the test position to an intermediate position between the test position and a work position;
wherein the transmission mechanism (10) comprises:
a first transmission assembly (103) arranged at least in part under the withdrawable truck (203) and coupled to the first moveable cover (101), the first transmission assembly (103) adapted to be actuated by a movement of the withdrawable truck (203) to move the first moveable cover (101); and
a second transmission assembly (104) arranged between and coupled to the first and second moveable covers (101, 102), the second transmission assembly (104) adapted to be actuated by a movement of the first moveable cover (101) to drive the second moveable cover (102) to move between a block position and a unblock position in response to the movement of the withdrawable truck (203).

2. The shutter mechanism (100) of claim 1, wherein the first transmission assembly (103) comprises:
an actuating portion (1031) adapted to be driven to move when the withdrawable truck (203) moves from the test position to the intermediate position;
a pair of primary driving bars (1033) arranged under the withdrawable truck (203) and coupled to the actuating portion (1031) to rotate about a first axis (X1) of the actuating portion (1031) with a movement of the actuating portion (1031); and
a pair of secondary driving bars (1034) arranged parallel to the first moveable cover (101) and coupled to each other at a second axis (X2) between a first end (1036) coupled to the first moveable cover (101) and a second end (1037) coupled to the primary driving bar (1033),
wherein the pair of secondary driving bars (1034) are operable to rotate about the second axis (X2) and to move the first moveable cover (101) in response to an rotation of the primary driving bar.

3. The shutter mechanism (100) of claim 1, wherein the first transmission assembly (103) comprises:
a first pivot shaft (1301) extending along a third axis (X3) perpendicular to a first direction (D1) of a movement of the withdrawable truck (203) and adapted to be driven to rotate about the third axis (X3) when the withdrawable truck (203) moves from the test position to the intermediate position;
a second pivot shaft (1302) extending along a fourth axis (X4) parallel to the first direction (D1), the second pivot shaft (1302) coupled to the first pivot shaft (1301) to rotate about the fourth axis (X4) with an rotation of the first pivot shaft (1301); and
a linkage assembly arranged parallel to the first moveable cover (101) and coupled to the second pivot shaft (1302) and the first moveable cover (101) to move the first moveable cover (101) in response to an rotation of the second pivot shaft (1302).

4. The shutter mechanism (100) of claim 3, wherein the linkage assembly comprises:
a first link bar (1303) coupled to the second pivot shaft (1302) and operable to rotate with the second pivot shaft (1302) about the fourth axis (X4); and
a second link bar (1304) arranged pivotably between the first link bar (1303) and the first moveable cover (101) to move the first moveable cover (101) with an rotation of the first link bar (1303).

5. The shutter mechanism (100) of claim 3, wherein the first transmission assembly (103) further comprises an actuating portion (1031) perpendicularly protruding from the first pivot shaft (1301), the actuating portion (1031) adapted to be driven by the withdrawable truck (203) to drive the first pivot shaft (1301).

6. The shutter mechanism (100) of claim 2 , further comprising:
an interlocking assembly (106) arranged under the withdrawable truck (203) and coupled to the actuating portion (1031) to prevent the first and second moveable covers (101, 102) from moving away from each other when the withdrawable truck (203) is in the test position.

7. The shutter mechanism (100) of claim 6, wherein the interlocking assembly (106) comprises:
a first wedge member (1061) arranged along a first direction (D1) of a movement of the withdrawable truck (203) and comprising a first bevel (1062) on an end away from the first moveable cover (101); and
a second wedge member (1063) perpendicular to the first wedge member (1061) and comprising a blocking slots (1065) for blocking the actuating portion (1031) in the first direction (D1) when the withdrawable truck (203) is in the test position,
wherein when the withdrawable truck (203) moves from the test position to the intermediate position, the second wedge member (1063) is operable to move with the actuating portion (1031) while moving along the first bevel (1062) in a second direction (D2) away from the first wedge member (1061) to unblock the actuating portion (1031) .

8. The shutter mechanism (100) of claim 7, further comprising:
an L-shaped slot (1071) for the actuating portion (1031) to slide therein and formed on a plate (107) arranged between the withdrawable truck (203) and the primary driving bars (1033).

9. The shutter mechanism (100) of claim 1, wherein the second transmission assembly (104) comprises:
a pivot pin (1041) operable to slide along a guide (113) fixedly arranged in the switchgear (200) in a first direction (D1) of a movement of the withdrawable truck (203);
a first bar (1042) coupled to the pivot pin (1041) and to the first moveable cover (101); and
a second bar (1043) coupled to the pivot pin (1041) and to the second moveable cover (102).

10. A switchgear (400) comprising a shutter mechanism (100) of any of claims 1- 9.
